(19) Europäisches Patentamt / European Patent Office / Office européen des brevets

(11) **EP 4 618 350 A1**

(12) **EUROPEAN PATENT APPLICATION**
published in accordance with Art. 153(4) EPC

(43) Date of publication:
**17.09.2025   Bulletin 2025/38**

(21) Application number: **23901989.6**

(22) Date of filing: **25.04.2023**

(51) International Patent Classification (IPC):
**H02J 3/24** (2006.01)     **H02J 3/32** (2006.01)
**H02J 3/00** (2006.01)     **H02J 13/00** (2006.01)

(52) Cooperative Patent Classification (CPC):
**H02J 3/00; H02J 3/24; H02J 3/32; H02J 13/00**

(86) International application number:
**PCT/CN2023/090550**

(87) International publication number:
**WO 2024/124776 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **16.12.2022   CN 202211637445**

(71) Applicant: **Sungrow Power Supply (Nanjing) Co.,
Ltd
Nanjing, Jiangsu 210012 (CN)**

(72) Inventors:
• **XU, Chengji**
  **Nanjing, Jiangsu 210012 (CN)**
• **DONG, Chen**
  **Nanjing, Jiangsu 210012 (CN)**
• **XIA, Yanhui**
  **Nanjing, Jiangsu 210012 (CN)**
• **HUANG, Tiangang**
  **Nanjing, Jiangsu 210012 (CN)**
• **WANG, Xiao**
  **Nanjing, Jiangsu 210012 (CN)**

(74) Representative: **Rooney, John-Paul
Withers & Rogers LLP
2 London Bridge
London SE1 9RA (GB)**

(54) **LOW-FREQUENCY OSCILLATION CONTROL METHOD AND SYSTEM**

(57)    The present invention provides a low-frequency oscillation control method and system. The method comprises: on the basis of a parameter value of a specified parameter of an electric power system, determining whether the electric power system is in a low-frequency oscillation state; if so, determining an oscillation adjustment parameter of a power oscillation damper on the basis of the parameter value of the specified parameter, and determining delay adjustment parameters on the basis of an oscillation communication delay calculated in advance; and calculating a required power reference value on the basis of the oscillation adjustment parameter and the delay adjustment parameters, and inputting the required power reference value into a power adjustment system, so as to cause the power adjustment system to perform a low-frequency oscillation suppression operation according to the required power reference value. According to the present invention, when the required power reference value is calculated, the oscillation communication delay of sampling communication is considered, so that the calculated required power reference value better conforms to a current power condition of the electric power system, and the accuracy is higher when the low-frequency oscillation suppression operation is performed on the basis of the calculated required power reference value.

**FIG. 1**

**Description**

The present application claims the priority to Chinese Patent Application No. 202211637445.1, titled "LOW-FREQUENCY OSCILLATION CONTROL METHOD AND SYSTEM", filed on December 16, 2022 with the China National Intellectual Property Administration, which is incorporated herein by reference in its entirety.

**FIELD**

The present disclosure relates to the field of low-frequency oscillation control of power grid, and in particular to a control method and system for low-frequency oscillation.

**BACKGROUND**

Power systems will enter a new development stage in the future with the proposal of the goal of "carbon peaking and carbon neutrality". As the proportion of renewable energy generation increases significantly, the connection of the high proportion of renewable energy generation devices and power electronic devices to the power grid brings more volatility and randomness into the system and imposes more challenges to the secure and stable operation of the power grid. At present, as more and more renewable energy generation devices are connected to the power grid, low-frequency oscillations occur frequently.

Thus, the method for suppressing the oscillation by damping in the relational power system is no longer effectively adequate for new power systems in which the high proportion of renewable energy sources and power electronic devices are connected. A solution in which the system for providing an active support by renewable energy generation and energy storage participates in the low-frequency oscillation suppression have been increasingly proposed and discussed. However, in practical engineering implementations, complex factors such as the installation location and deployment method of sampling and control systems impose stringent requirements on the applicability of control principles and the selection of corresponding parameters. For example, in a complex power system, due to issues with the accuracy and timeliness of sampling communication, the control mechanism of the power oscillation damping based on parameters such as sample amplitude and sample phase may fail to accurately determine the current operating condition of the system and provide appropriate compensation, which introduces certain issues and degradation of the final oscillation suppression.

**SUMMARY**

A control method and system for low-frequency oscillation are provided according to the present disclosure, thereby improving accuracy of low-frequency oscillation suppression.

To address the above technical problems, technical solutions provided in the present disclosure are described below.

A control method for low-frequency oscillation, includes:

obtaining a value of a specified parameter of a power system, and determining whether the power system is in a low-frequency oscillation state based on the value of the specified parameter;

determining an oscillation regulation parameter of a power oscillation damping based on the value of the specified parameter and determining a delay regulation parameter based on an oscillation communication delay calculated in advance, in response to the power system being in the low-frequency oscillation state; and

calculating a demand power reference value based on the oscillation regulation parameter and the delay regulation parameter, and inputting the demand power reference value into a power regulation system, where the power regulation system performs low-frequency oscillation suppression based on the demand power reference value.

In an embodiment, the obtaining a value of a specified parameter of a power system and determining whether the power system is in a low-frequency oscillation state based on the value of the specified parameter includes:

obtaining the value of the specified parameter of the power system, with a preset sample time window; and

determining that the power system is in the low-frequency oscillation state, in response to the value of the specified parameter meeting a value limit condition consecutively for a preset number of times.

In an embodiment, determining the oscillation regulation parameter of the power oscillation damping based on the value of the specified parameter includes:

determining, based on the value of the specified parameter, a maximum value of an oscillation frequency within a current sampling period and a minimum value of the oscillation frequency within the current sampling period;

obtaining a maximum value of the oscillation frequency within a previous sampling period and a minimum value of the oscillation frequency within the previous sampling period; and

determining a proportional coefficient of the power oscillation damping and a phase compensation transfer function value as the oscillation regulation parameter of the power oscillation damping, in response to an offset between the maximum value of the oscillation frequency within the current sampling period and the maximum value of the oscillation frequency within the previous sampling period being greater than a preset offset threshold, and/or, an offset between the minimum value of the oscillation frequency within the current sampling period and the minimum value of the oscillation frequency within the previous sampling period being greater than the preset offset threshold.

In an embodiment, the determining a proportional coefficient of the power oscillation damping and a phase compensation transfer function value as the oscillation regulation parameter of the power oscillation damping includes:

obtaining a pre-configured proportional coefficient of the power oscillation damping, a regulation coefficient corresponding to a maximum frequency value of the power oscillation damping, and an regulation coefficient corresponding to a minimum frequency value of the power oscillation damping;

determining the phase compensation transfer function value, based on the maximum value of the oscillation frequency within the current sampling period, the minimum value of the oscillation frequency within the current sampling period, the regulation coefficient corresponding to the maximum frequency value, and the regulation coefficient corresponding to the minimum frequency value; and

determining the proportional coefficient of the power oscillation damping and the phase compensation transfer function value as the oscillation regulation parameter of the power oscillation damping.

In an embodiment, the determining the phase compensation transfer function value, based on a maximum value of the oscillation frequency within the current sampling period, a minimum value of the oscillation frequency within the current sampling period, the regulation coefficient corresponding to the maximum frequency value, and the regulation coefficient corresponding to the minimum frequency value includes:

calculating a first phase compensation coefficient, based on the maximum value of the oscillation frequency within the current sampling period and the regulation coefficient corresponding to the maximum frequency value;

calculating a second phase compensation coefficient, based on the minimum value of the oscillation frequency within the current sampling period and the regulation coefficient corresponding to the minimum frequency value; and

determining the phase compensation transfer function value corresponding to the first phase compensation coefficient and the second phase compensation coefficient.

In an embodiment, the determining a delay regulation parameter based on an oscillation communication delay calculated in advance includes:

determining multiple sets of current total delays, and calculating an average of the multiple sets of current total delays as an average delay; and

determining a delay interval in which the average delay is located, and obtaining a delay regulation parameter corresponding to the delay interval, where the delay regulation parameter includes a delay compensation proportional coefficient and a delay compensation time constant.

In an embodiment, the determining multiple sets of current total delays includes:

for each current total delay of the multiple sets of current total delays, obtaining a delay parameter, where the delay parameter includes a sampling delay, a data transmission delay, a data synchronization delay and an instruction response delay; and

calculating a sum of the sampling delay, the data transmission delay, the data synchronization delay, and the instruction response delay, as the current total delay.

In an embodiment, the specified parameter includes an active power.
The calculating a demand power reference value based on the oscillation regulation parameter and the delay regulation parameter includes:

correcting the active power by using the oscillation regulation parameter, to obtain an intermediate power; and

correcting the intermediate power by using the delay regulation parameter, to obtain the demand power reference value.

In an embodiment, the power regulation system includes: at least one of an energy storage system, a hydrogen production system, and a distributed renewable energy system.
A control system for low-frequency oscillation includes a power oscillation damping configured to perform the control method for low-frequency oscillation described above. The control system of the low-frequency oscillation further includes: a sampling device and a power regulation system.

The sampling device is configured to collect a value of a specified parameter of a power system.

The power regulation system is configured to determine an operation mode corresponding to a demand power reference value and perform low-frequency oscillation suppression according to the operation mode.

In an embodiment, the power regulation system is a hybrid energy storage system in an energy storage system, and the power regulation system includes an energy storage controller, a supercapacitor, and a lithium battery.

The energy storage controller is configured to determine the operation mode corresponding to the demand power reference value, and control the supercapacitor and the lithium battery to perform low-frequency oscillation suppression according to the operation mode.

In an embodiment, the energy storage controller, which is configured to determine the operation mode corresponding to the demand power reference value, and control the supercapacitor and the lithium battery to perform low-frequency oscillation suppression according to the operation mode, is further configured to:

determine that the operation mode is a first operation mode, in response to the demand power reference value being not greater than a demand power threshold; and perform low-frequency oscillation suppression according to the first operation mode, where the first operation mode includes: regulating power by the supercapacitor or the lithium battery; and

determine that the operation mode is a second operation mode, in response to the demand power reference value being greater than the demand power threshold; and perform low-frequency oscillation suppression according to the second operation mode, where the second operation mode includes: regulating power by one of the supercapacitor or the lithium battery, or regulating power by both of the supercapacitor and the lithium battery.

Compared to the relational technology, beneficial effects of the present disclosure are described as follows.

The control method and system for low-frequency oscillation are provided according to the present disclosure. The control method includes: obtaining the value of the specified parameter of a power system, and determining whether the power system is in a low-frequency oscillation state based on the value of the specified parameter; determining an oscillation regulation parameter of a power oscillation damping based on the value of the specified parameter and determining a delay regulation parameter based on an oscillation communication delay calculated in advance, in response to the power system being in the low-frequency oscillation state; and calculating a demand power reference value based on the oscillation regulation parameter and the delay regulation parameter, and inputting the demand power reference value into a power regulation system, where the power regulation system performs low-frequency oscillation suppression based on the demand power reference value. That is, in the present disclosure, the oscillation communication delay of sampling communication is considered in the process of calculating the demand power reference value, so that the calculated demand power reference value is more in line with the current power situation of the power system. In this way, the accuracy of low-frequency oscillation suppression can be improved when low-frequency oscillation suppression is performed based on the calculated demand power reference value.

**BRIEF DESCRIPTION OF THE DRAWINGS**

Hereinafter drawings to be applied in embodiments of the present disclosure or in the conventional technology are briefly described, in order to illustrate technical solutions according to embodiments of the present disclosure or in the conventional technology more clearly. Apparently, the drawings in the following descriptions are only some embodiments of the present disclosure, and other drawings may be obtained by those skilled in the art based on the provided drawings without any creative effort.

FIG. 1 is a method flowchart illustrating a control method for low-frequency oscillation according to an embodiment of the present disclosure;

FIG. 2 is a flowchart illustrating a method for determining an oscillation regulation parameter according to an embodiment of the present disclosure;

FIG. 3 is a flowchart illustrating a method for determining a delay regulation parameter according to an embodiment of the present disclosure; and

FIG. 4 is a schematic structural diagram illustrating a control system for low-frequency oscillation according to an embodiment of the present disclosure.

**DETAILED DESCRIPTION**

The technical solutions according to the embodiments of the present disclosure will be described clearly and completely as follows in conjunction with the drawings in the embodiments of the present disclosure. It is apparent that the described embodiments are only some of the embodiments according to the present disclosure, rather than all the embodiments. All other embodiments obtained by those skilled in the art based on the embodiments of the present disclosure without any creative work fall within the protection scope of the present disclosure.

Power systems will enter a new development stage in the future with the proposal of the goal of "carbon peaking and carbon neutrality". As the proportion of renewable energy generation increases significantly, the connection of the high proportion of renewable energy generation devices and power electronic devices to the power grid brings more volatility and randomness into the system and imposes more challenges to the secure and stable operation of the power grid. At present, as more and more renewable energy generation devices are connected to the power grid, low-frequency oscillations occur frequently.

At present, the method for suppressing the oscillation by damping in the relational power system is no longer effectively adequate for new power systems in which the high proportion of renewable energy sources and power electronic devices are connected. A solution in which the system for providing an active support by renewable energy generation and energy storage participates in the low-frequency oscillation suppression have been increasingly proposed and discussed. However, in practical engineering implementations, complex factors such as the installation location and deployment method of sampling and control systems impose stringent requirements on the applicability of control principles and the selection of corresponding parameters. For example, in a complex power system, due to issues with the accuracy and timeliness of sampling communication, the control mechanism of the power oscillation damping based on parameters such as sample amplitude and sample phase may fail to accurately determine the current operating condition of the system and provide appropriate compensation, which introduces certain issues and degradation of the final oscillation suppression.

In view of this, a control method and system for low-frequency oscillation are provided according to the present disclosure. The method includes obtaining a value of a specified parameter of a power system, and determining whether the power system is in a low-frequency oscillation state based on the value of the specified parameter; determining an oscillation regulation parameter of a power oscillation damping based on the value of the specified parameter and determining a delay regulation parameter based on an oscillation communication delay calculated in advance, in response to the power system being in the low-frequency oscillation state; and calculating a demand power reference value based on the oscillation regulation parameter and the delay regulation parameter, and inputting the demand power reference value into a power regulation system, where the power regulation system performs low-frequency oscillation suppression based on the demand power reference value. That is, in the present disclosure, the oscillation communication delay of sampling communication is considered in the process of calculating the demand power reference value, so that the calculated demand power reference value is more in line with the current power situation of the power system. In this way, the accuracy of low-frequency oscillation suppression can be improved when low-frequency oscillation suppression is performed based on the calculated demand power reference value.

On the basis of the above, a control method for low-frequency oscillation is provided according to the embodiment of the present disclosure. The control method is applied to a power oscillation damping (POD) with an additional damping controller.

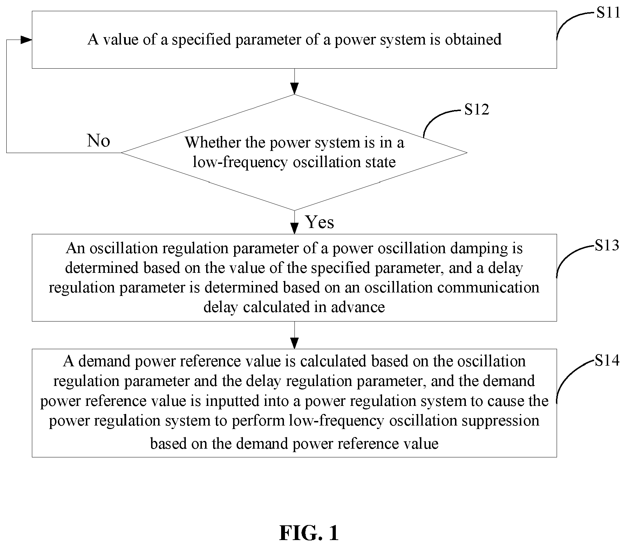

Referring to FIG. 1, the control method for low-frequency oscillation may include steps S11 to S14.

In step S11, a value of a specified parameter of a power system is obtained.

In practical applications, the value of the specified parameter of the power system may be obtained via a preset sample time window.

In an embodiment, a phasor measurement unit (PMU) collects the value of the specified parameter of the power system. In practical applications, the specified parameter may be an electrical quantity of a tie line, such as an active power. The subsequent embodiments will be described with the specified parameter as the active power. Alternatively, the specified parameter may be a reactive power, a frequency, or the like.

In the case that the specified parameter is the active power, the power oscillation damping may obtain the value of the specified parameter of the power system from the phasor measurement unit (PMU) with the preset sample time window. The value of the specified parameter may generally be the active power and/or the change amount of the active power.

In this embodiment, the preset sample time window is generally adjusted according to the range of the oscillation to be suppressed and the actual performance of the embedded device. The typical value of the preset sample time window is 10 seconds, and the sampling frequency may typically be 4 KHz.

In step S12, whether the power system is in a low-frequency oscillation state is determined; step S13 is executed in the case that the power system is in the low-frequency oscillation state; and step S11 may be returned and executed in the case that the power system is not in the low-frequency oscillation state.

In an embodiment, whether the power system is in the low-frequency oscillation state may be determined based on the value of the specified parameter.

Specifically, it is determined that the power system is in the low-frequency oscillation state, in the case that the value of the specified parameter meets a value limit condition consecutively for a preset number of times.

In practical applications, a group of appropriate low-frequency oscillation detection thresholds is configured for the change amount of the active power. This group of detection thresholds is for the frequency and amplitude of the current active power oscillation. In the process of the active power oscillation, the frequency and amplitude of a change of the peaks and troughs are detected. If the amplitude meets a starting condition, the frequency falls within the range of 0.2 to 2.5 Hz, and the condition for a preset number of times is met, such as four times, it is determined that the power system is in the low-frequency oscillation state. The threshold of amplitude, and the value of the specified parameter meeting a value limit condition consecutively for four times, is to prevent other instantaneous disturbances that are not low-frequency oscillations from being misdiagnosis as the low-frequency oscillation.

In an embodiment, the step of obtaining a value of a specified parameter of a power system, and determining whether the power system is in a low-frequency oscillation state based on the value of the specified parameter may include: obtaining the value of the specified parameter of the power system, with a preset sample time window; and determining that the power system is in the low-frequency oscillation state, in response to the value of the specified parameter meeting a value limit condition consecutively for a preset number of times.

In step S13, an oscillation regulation parameter of a power oscillation damping is determined based on the value of the specified parameter, and a delay regulation parameter is determined based on an oscillation communication delay calculated in advance.

In practical applications, the oscillation regulation parameter of the power oscillation damping generally includes a proportional coefficient of the power oscillation damping, and a phase compensation transfer function value.

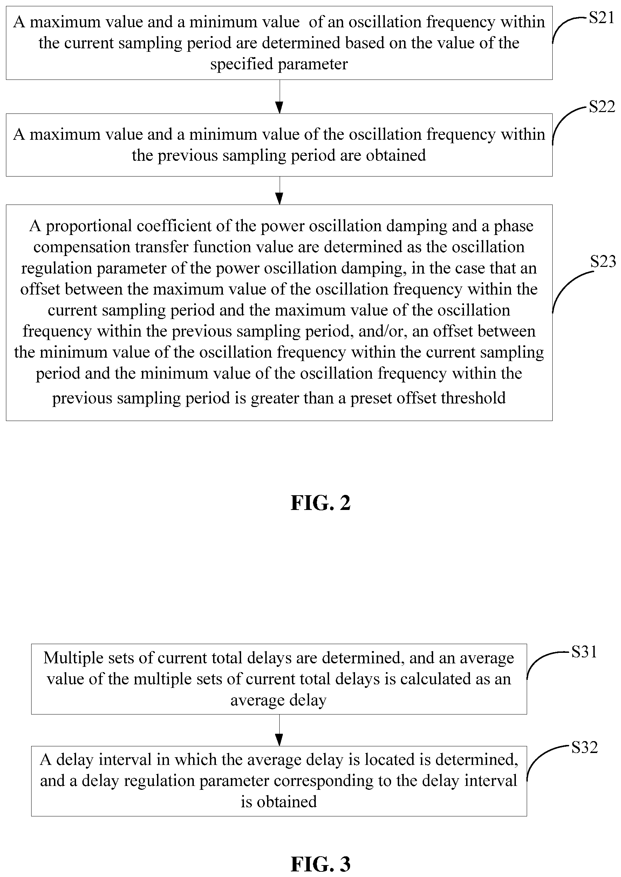

Referring to FIG. 2, the oscillation regulation parameter of the power oscillation damping based on the value of the specified parameter may be determined by steps S21 to S23.

In step S21, a maximum value of an oscillation frequency within the current sampling period and a minimum value of the oscillation frequency within the current sampling period are determined based on the value of the specified parameter.

In an embodiment, firstly, based on the value of the specified parameter, the maximum value $f_{osc\text{-}max}$ and the minimum value $f_{osc\text{-}min}$ of the oscillation frequency with the current sampling period are obtained through an active power measurement algorithm.

It should be noted that if only one oscillation frequency is within the current sampling period, $f_{osc\text{-}max} = f_{osc\text{-}min}$; and if multiple oscillation frequencies are in the current sampling period, the $f_{osc\text{-}max}$ and $f_{osc\text{-}min}$ are determined separately.

In step S22, a maximum value of the oscillation frequency within the previous sampling period and a minimum value of the oscillation frequency within the previous sampling period are obtained.

In practical applications, the oscillation regulation parameter of the power oscillation damping may be re-determined only when the maximum value of the oscillation frequency within the current sampling period are greatly different from the maximum value of the oscillation frequency within the previous sampling period and/or the minimum value of the oscillation frequency within the current sampling period are greatly different from the minimum value of the oscillation frequency within the previous sampling period. If the difference between the maximum value of the oscillation frequency within the current sampling period and the maximum value of the oscillation frequency within the previous sampling period is small and the difference between the minimum value of the oscillation frequency within the current sampling period and the minimum value of the oscillation frequency within the previous sampling period is small, the oscillation regulation parameter of the power oscillation damping in the previous sampling period is adopted directly.

In the present embodiment, the maximum value and the minimum value of the oscillation frequency in the previous sampling period are acquired.

In step S23, a proportional coefficient of the power oscillation damping and a phase compensation transfer function value are determined as the oscillation regulation parameter of the power oscillation damping, in the case that an offset between the maximum value of the oscillation frequency within the current sampling period and the maximum value of the oscillation frequency within the previous sampling period, and/or, an offset between the minimum value of the oscillation frequency within the current sampling period and the minimum value of the oscillation frequency within the previous sampling period is greater than a preset offset threshold.

In an embodiment, the preset offset threshold may be 20%.

The proportional coefficient of the power oscillation damping and the phase compensation transfer function value are determined as the oscillation regulation parameter of the power oscillation damping, in the case that the offset between the maximum value of the oscillation frequency within the current sampling period and the maximum value of the oscillation frequency within the previous sampling period, and/or, the offset between the minimum value of the oscillation frequency within the current sampling period and the minimum value of the oscillation frequency within the previous sampling period is greater than the preset offset threshold, such as, 20%.

The oscillation regulation parameter of the power oscillation damping within the previous period is adopted to reduce the amount of calculation, in the case that the offset between the maximum value of the oscillation frequency within the current sampling period and the maximum value of the oscillation frequency within the previous sampling period, and, the offset between the minimum value of the oscillation frequency within the current sampling period and the minimum value of the oscillation frequency within the previous sampling period are both not greater than the preset offset threshold.

On the basis of the present embodiment, the proportional coefficient of the power oscillation damping and the phase compensation transfer function value are determined as the oscillation regulation parameter of the power oscillation damping by the following steps 1), 2) and 3).

In step 1), a pre-configured proportional coefficient of the power oscillation damping, a regulation coefficient corresponding to a maximum frequency value of the power oscillation damping, and a regulation coefficient corresponding to a minimum frequency value of the power oscillation damping are obtained.

In an embodiment, in the process of obtaining the pre-configured proportional coefficient of the power oscillation damping, the regulation coefficient corresponding to the maximum frequency value, and the regulation coefficient corresponding to the minimum frequency value, the pre-configured proportional coefficient $K_{pod}$ of the power oscillation damping is generally an experience value, which may be obtained directly.

The regulation coefficient corresponding to the maximum frequency is represented by $k_1$, and the regulation coefficient corresponding to the minimum frequency is represented by $k_2$, both of which may be obtained directly.

In step 2) the phase compensation transfer function value is determined, based on a maximum value and a minimum value of the oscillation frequency within the current sampling period, the regulation coefficient corresponding to the maximum frequency value, and the regulation coefficient corresponding to the minimum frequency value.

Specifically, step 2) may include the following steps 2.1), 2.2) and 2.3).

In step 2.1), a first phase compensation coefficient is calculated based on the maximum value of the oscillation frequency within the current sampling period and the regulation coefficient corresponding to the maximum frequency value.

In detail, the first phase compensation coefficient $T_{pod1}$ is calculated by the following formula:

$$T_{pod1} = 1/k_1 f_{osc-max} .$$

In step 2.2), a second phase compensation coefficient is calculated based on the minimum value of the oscillation frequency within the current sampling period and the regulation coefficient corresponding to the minimum frequency value.

The second phase compensation coefficient $T_{pod2}$ is calculated by the following formula:

$$T_{pod2} = 1/k_2 f_{osc-min} .$$

In step 2.3), the phase compensation transfer function value corresponding to the first phase compensation coefficient and the second phase compensation coefficient is determined.

In an embodiment, the phase compensation transfer function value is calculated by the formula:

$$\frac{1 + sT_{pod1}}{1 + sT_{pod2}} .$$

In step 3), the proportional coefficient of the power oscillation damping and the phase compensation transfer function value are determined as the oscillation regulation parameter of the power oscillation damping.

In an embodiment, the oscillation regulation parameter of the power oscillation damping includes the proportional coefficient $K_{pod}$ of the power oscillation damping and the phase compensation transfer function value.

In another implementation of the present disclosure, referring to FIG. 3, the delay regulation parameter is determined based on an oscillation communication delay calculated in advance by the following steps S31 to S32.

In step S31, multiple sets of current total delays are determined, and an average value of the multiple sets of current total delays is calculated as an average delay.

In an embodiment, the multiple sets of current total delays are determined by the following steps 1) and 2).

In step 1), for each current total delay of the multiple sets of current total delays, a delay parameter is obtained.

The delay parameter includes a sampling delay, a data transmission delay, a data synchronization delay and an instruction response delay.

The sampling delay $\tau_{PMU}$ is a PMU sampling delay, the data transmission delay $\tau_{trans}$ is a PMU data transmission delay, the data synchronization delay $\tau_{sync}$ is a delay of a power oscillation measurement module (which may be arranged in the POD or in the energy storage controller) synchronizing the PMU data, and the instruction response delay $\tau_{PCS}$ is a delay required for the regulation instruction to be transferred to the power regulation system, such as the energy storage converter PCS (Power Conversion System) in the energy storage system, and for the PCS to complete execution.

The sampling delay $\tau_{PMU}$, the data synchronization delay $\tau_{syn}$, the instruction response delay $\tau_{PCS}$ may be preset according to the performance parameters of different PMUs, power oscillation measurement modules and PCSs. The data transmission delay $\tau_{trans}$ may be calculated in real time based on the time scale carried in a PMU sampling message.

In step 2), a sum of the sampling delay, the data transmission delay, the data synchronization delay, and the instruction response delay is calculated as a current total delay.

In an embodiment, the current total delay $\tau$ is calculated by the following formula:

$$\tau = \tau_{PMU} + \tau_{trans} + \tau_{sync} + \tau_{PCS} \ .$$

An adaptive delay compensation module may record the current total delay $\tau$ multiple times to obtain multiple sets of current total delays, and calculate an average value of the multiple sets of current total delays $\tau$ as the average delay $\tau_n$.

In step S32, a delay interval in which the average delay is located is determined, and a delay regulation parameter corresponding to the delay interval is obtained.

The delay regulation parameter includes a delay compensation proportional coefficient $K_d(\tau_n)$, and delay compensation time constants $T_{d1}(\tau)$ and $T_{d2}(\tau)$.

The adaptive delay compensation module determines, based on the average delay measured by the system currently, which delay interval the current average delay belongs to; and obtains the delay regulation parameter corresponding to the delay interval.

In practical applications, according to the response time of the system, the value of $T_{d2}(\tau)$ may be determined directly within the range of 0.04s to 0.1s. The $T_{d1}(\tau)$ may be calculated based on $T_{d2}(\tau)$ and the oscillation frequency value $\omega$ of the system. The $K_d(\tau_n)$ may be calculated based on $T_{d1}(\tau)$, $T_{d2}(\tau)$ and the oscillation frequency value $\omega$ of the system.

In step S14, a demand power reference value is calculated based on the oscillation regulation parameter and the delay regulation parameter, and the demand power reference value is inputted into a power regulation system to cause the power regulation system to perform low-frequency oscillation suppression based on the demand power reference value.

In practical applications, the power regulation system includes at least one of an energy storage system, a hydrogen production system, and a distributed renewable energy system. In another embodiment, the power regulation system may be a hybrid energy storage system in the energy storage system.

In the case that the specified parameter includes the active power, the active power is corrected by the oscillation regulation parameter to obtain an intermediate power; and the intermediate power is corrected by the delay regulation parameter to obtain the demand power reference value.

It should be noted that, when the intermediate power is corrected by the delay regulation parameter, the transfer function value $\dfrac{1 + sT_{d1}(\tau)}{1 + sT_{d2}(\tau)}$ is used. The transfer function value corresponds to the delay compensation time constants $T_{d1}(\tau)$ and $T_{d2}(\tau)$ in the delay regulation parameter

The demand power reference value is determined and inputted into the power regulation system. The power regulation system may be a hybrid energy storage system in the energy storage system. The power regulation system may include an energy storage controller, a supercapacitor, and a lithium battery. In addition, the power regulation system may only include a lithium battery. However, a hybrid energy storage system is a better implementation solution for the power regulation system, which is able to improve response speed.

The power regulation system determines an operation mode corresponding to a demand power reference value and performs low-frequency oscillation suppression according to the operation mode. In an embodiment, the energy storage controller may determine the operation mode corresponding to the demand power reference value, and control the supercapacitor and the lithium battery to perform low-frequency oscillation suppression according to the operation mode.

In practical applications, the demand power reference value is inputted into the power regulation system. The power regulation system provides an additional damping control. In the case that the power regulation system is a hybrid energy storage system, the energy storage manner of the hybrid energy storage system is generally configured as energy-type plus power-type, which is not limited to specific configurations. The typical configuration scheme may be supercapacitor plus lithium battery. The idea of this typical configuration control scheme is that, in the case that various constraints such as a voltage constraint, a current constraint, an SOC constraint and other constraints for the lithium battery and the supercapacitor in the hybrid energy storage system are met, if the demand power reference value is greater than the demand power threshold, the supercapacitor is preferentially adopted to absorb/output power from/to the grid, and if only supercapacitor cannot meet the requirement of additional damping control, the lithium battery or the combination of the supercapacitor and lithium battery is adopted to absorb/output power from/to the grid according to the specific situation, to meet the requirement of the low-frequency oscillation suppression.

Furthermore, the operation mode is determined as a first operation mode, and low-frequency oscillation suppression is performed according to the first operation mode, in the case that the demand power reference value is not greater than the demand power threshold. The first operation mode includes: regulating power by the supercapacitor or the lithium battery.

In an embodiment, the supercapacitor or the lithium battery is adopted to provide/absorb power according to the power distribution strategy, in the case that the demand power reference value is not greater than the demand power threshold.

For example, if discharging is required and the remaining power SOC of the supercapacitor is above 60%, the supercapacitor is preferentially adopted to provide power. If charging is required and the SOC of the supercapacitor is below 30%, the supercapacitor is preferentially adopted to absorb power.

If the SOC of the supercapacitor does not meet the requirement, and the SOC of the lithium battery is more than 80% or less than 20%, the lithium battery is adopted to provide (SOC is more than 80%) or absorb (SOC is less than 20%) power. If both the SOC of the supercapacitor and the SOC of the lithium battery do not meet the requirement, a priority will be set to respond depending on the actual engineering requirement.

The operation mode is determined as a second operation mode, and low-frequency oscillation suppression is performed according to the second operation mode, in the case that the demand power reference value is greater than the demand power threshold. The second operation mode includes: regulating power only by the supercapacitor, regulating power only by the lithium battery, or regulating power by the supercapacitor and the lithium battery.

For example, in the case that the demand power reference value is greater than the demand power threshold, the supercapacitor operates at full power to provide/absorb power according to the power distribution strategy. In the case that the current remaining SOC of the supercapacitor does not meet the actual control demand, and the SOC of the lithium battery is more than 80% or less than 20%, the lithium battery and the supercapacitor are adopted to provide or absorb power together. In the case that the SOC of the supercapacitor and the SOC of the lithium battery do not meet the requirement, a priority is set to respond depending on the actual engineering requirement.

In this embodiment, the value of the specified parameter of the power system is obtained, and whether the power system is in the low-frequency oscillation state is determined based on the value of the specified parameter. In the case that the power system is in the low-frequency oscillation state, the oscillation regulation parameter of the power oscillation damping is determined based on the value of the specified parameter, and the delay regulation parameter is determined based on the oscillation communication delay calculated in advance, the demand power reference value is calculated based on the oscillation regulation parameter and the delay regulation parameter, and the demand power reference value is inputted into the power regulation system to cause the power regulation system to perform low-frequency oscillation suppression based on the demand power reference value. That is, in the present disclosure, the oscillation communication delay of sampling communication is considered in the process of calculating the demand power reference value, so that the calculated demand power reference value is more in line with the current power situation of the power system. In this way, the accuracy of low-frequency oscillation suppression can be improved when low-frequency oscillation suppression is performed based on the calculated demand power reference value.

In the solution that the energy storage system only including lithium battery is used to response to additional damping control, its response ability and response speed to different oscillation situations have a certain limitation, due to the energy storage characteristics of the lithium battery. In the present disclosure, the hybrid energy storage system is chosen to participate in the low-frequency oscillation suppression. With the pre-established power distribution strategy, additional damping control can be provided more rapidly. The problem of frequent deep charging and discharging of lithium battery is effectively improved, and furthermore, the reliability and service life of the energy storage system are improved.

In addition, in the present disclosure, communication delay adaptive compensation is considered. The compensation parameter can be dynamically selected based on the average delay of the current system, thereby providing additional damping control rapidly and accurately and improving the effect of low-frequency oscillation suppression, so that the ability of the power grid to suppress low-frequency oscillation is improved, and the reliability and service life of the hybrid energy storage system are effectively improved.

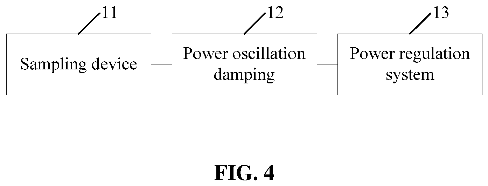

In an embodiment, on the basis of the embodiment of the power oscillation damping described above, a control system for low-frequency oscillation is provided according to another embodiment of the present disclosure. Referring to FIG. 4, the control system for low-frequency oscillation includes a power oscillation damping 12 for executing the control method for low-frequency oscillation described above, where the control system for low-frequency oscillation further includes: a sampling device 11 and a power regulation system 13.

The sampling device 11 is configured to collect a value of a specified parameter of a power system.

The power regulation system 13 is configured to determine an operation mode corresponding to a demand power reference value and perform low-frequency oscillation suppression according to the operation mode.

The sampling device 11 may be the PMU sampling device described above.

Furthermore, the power regulation system 13 may be a hybrid energy storage system in an energy storage system, and the power regulation system 13 includes an energy storage controller, a supercapacitor, and a lithium battery.

The energy storage controller is configured to determine the operation mode corresponding to the demand power reference value, and control the supercapacitor and the lithium battery to perform low-frequency oscillation suppression according to the operation mode.

Furthermore, the energy storage controller, which is configured to determine the operation mode corresponding to the demand power reference value and control the supercapacitor and the lithium battery to perform low-frequency oscillation suppression according to the operation mode, is further configured to:

determine that the operation mode is a first operation mode, in response to the demand power reference value being not greater than a demand power threshold; and perform low-frequency oscillation suppression according to the first operation mode, where the first operation mode includes: regulating power by the supercapacitor or the lithium battery; and

determine that the operation mode is a second operation mode in response to the demand power reference value being greater than the demand power threshold; and perform low-frequency oscillation suppression according to the second operation mode, where the second operation mode includes: regulating power by one of the supercapacitor or the lithium battery, or regulating power by both of the supercapacitor and the lithium battery.

It should be noted that, reference may be made to the corresponding description of the above embodiments for a specific working process of the sampling device, the power regulation system and the power oscillation damping in this embodiment, which will not be repeated herein.

In this embodiment, the value of the specified parameter of the power system is obtained, and whether the power system is in the low-frequency oscillation state is determined based on the value of the specified parameter. In the case the power system is in the low-frequency oscillation state, the oscillation regulation parameter of the power oscillation damping is determined based on the value of the specified parameter, and the delay regulation parameter is determined based on the oscillation communication delay calculated in advance, the demand power reference value is calculated based on the oscillation regulation parameter and the delay regulation parameter, and the demand power reference value is inputted into the power regulation system to cause the power regulation system to perform low-frequency oscillation suppression based on the demand power reference value. That is, in the present disclosure, the oscillation communication delay of sampling communication is considered in the process of calculating the demand power reference value, so that the calculated demand power reference value is more in line with the current power situation of the power system. In this way, the accuracy of low-frequency oscillation suppression can be improved when low-frequency oscillation suppression is performed based on the calculated demand power reference value.

The above description of the disclosed embodiments enables those skilled in the art to implement or use the present disclosure. Various modifications to these embodiments are obvious to those skilled in the art, the general principles defined herein may be implemented in other embodiments without departing from the spirit or scope of the present disclosure. Therefore, the present disclosure is not limited to the embodiments described herein, but should be in accordance with the broadest scope consistent with the principle and novel features disclosed herein.

**Claims**

1. A control method for low-frequency oscillation, **characterized by**, comprising:

   obtaining a value of a specified parameter of a power system, and determining whether the power system is in a low-frequency oscillation state based on the value of the specified parameter;
   determining an oscillation regulation parameter of a power oscillation damping based on the value of the specified parameter, and determining a delay regulation parameter based on an oscillation communication delay calculated in advance, in response to the power system being in the low-frequency oscillation state; and
   calculating a demand power reference value based on the oscillation regulation parameter and the delay regulation parameter, and inputting the demand power reference value into a power regulation system, wherein the power regulation system performs low-frequency oscillation suppression based on the demand power reference value.

2. The control method for low-frequency oscillation according to claim 1, wherein the obtaining a value of a specified parameter of a power system, and determining whether the power system is in a low-frequency oscillation state based on the value of the specified parameter comprises:

   obtaining the value of the specified parameter of the power system, with a preset sample time window; and
   determining that the power system is in the low-frequency oscillation state, in response to the value of the specified parameter meeting a value limit condition consecutively for a preset number of times.

3. The control method for low-frequency oscillation according to claim 1, wherein the determining an oscillation regulation parameter of a power oscillation damping based on the value of the specified parameter comprises:

   determining, based on the value of the specified parameter, a maximum value of an oscillation frequency within a current sampling period and a minimum value of the oscillation frequency within the current sampling period;
   obtaining a maximum value of the oscillation frequency within a previous sampling period and a minimum value of the oscillation frequency within the previous sampling period; and determining a proportional coefficient of the power oscillation damping and a phase compensation transfer function value as the oscillation regulation parameter of the power oscillation damping, in response to an offset between the maximum value of the oscillation frequency within the current sampling period and the maximum value of the oscillation frequency within the previous sampling period being greater than a preset offset threshold, and/or, an offset between the minimum value of the oscillation frequency within the current sampling period and the minimum value of the oscillation frequency within the previous sampling period being greater than the preset offset threshold.

4. The control method for low-frequency oscillation according to claim 3, wherein the determining a proportional coefficient of the power oscillation damping and a phase compensation transfer function value as the oscillation regulation parameter of the power oscillation damping comprises:

obtaining a pre-configured proportional coefficient of the power oscillation damping, a regulation coefficient corresponding to a maximum frequency value of the power oscillation damping, and an regulation coefficient corresponding to a minimum frequency value of the power oscillation damping;
determining the phase compensation transfer function value, based on the maximum value of the oscillation frequency within the current sampling period, the minimum value of the oscillation frequency within the current sampling period, the regulation coefficient corresponding to the maximum frequency value, and the regulation coefficient corresponding to the minimum frequency value; and
determining the proportional coefficient of the power oscillation damping and the phase compensation transfer function value as the oscillation regulation parameter of the power oscillation damping.

5. The control method for low-frequency oscillation according to claim 4, wherein the determining the phase compensation transfer function value, based on the maximum value of the oscillation frequency within the current sampling period, the minimum value of the oscillation frequency within the current sampling period, the regulation coefficient corresponding to the maximum frequency value, and the regulation coefficient corresponding to the minimum frequency value comprises:

calculating a first phase compensation coefficient, based on the maximum value of the oscillation frequency within the current sampling period and the regulation coefficient corresponding to the maximum frequency value;
calculating a second phase compensation coefficient, based on the minimum value of the oscillation frequency within the current sampling period and the regulation coefficient corresponding to the minimum frequency value; and
determining the phase compensation transfer function value corresponding to the first phase compensation coefficient and the second phase compensation coefficient.

6. The control method for low-frequency oscillation according to claim 1, wherein the determining a delay regulation parameter based on an oscillation communication delay calculated in advance comprises:

determining a plurality of sets of current total delays, and calculating an average value of the plurality of sets of current total delays as an average delay; and
determining a delay interval in which the average delay is located, and obtaining a delay regulation parameter corresponding to the delay interval, wherein the delay regulation parameter comprises a delay compensation proportional coefficient and a delay compensation time constant.

7. The control method for low-frequency oscillation according to claim 6, wherein the determining a plurality of sets of current total delays comprises: for each current total delay of the multiple sets of current total delays,

obtaining a delay parameter, wherein the delay parameter comprises a sampling delay, a data transmission delay, a data synchronization delay and an instruction response delay; and
calculating a sum of the sampling delay, the data transmission delay, the data synchronization delay, and the instruction response delay as the current total delay.

8. The control method for low-frequency oscillation according to claim 1, wherein the specified parameter comprises an active power;
the calculating a demand power reference value based on the oscillation regulation parameter and the delay regulation parameter comprises:

correcting the active power by using the oscillation regulation parameter, to obtain an intermediate power; and

correcting the intermediate power by using the delay regulation parameter, to obtain the demand power reference value.

9. The control method for low-frequency oscillation according to claim 1, wherein the power regulation system comprises: at least one of an energy storage system, a hydrogen production system, and a distributed renewable energy system.

10. A control system for low-frequency oscillation, **characterized by**, comprising a power oscillation damping configured to perform the control method for low-frequency oscillation according to any one of claims 1 to 9, wherein the low-frequency oscillation control system further comprises:

   a sampling device and a power regulation system,
   wherein the sampling device is configured to collect a value of a specified parameter of a power system; and
   the power regulation system is configured to determine an operation mode corresponding to the demand power reference value and perform low-frequency oscillation suppression according to the operation mode.

11. The control system for low-frequency oscillation according to claim 10, wherein the power regulation system is a hybrid energy storage system in an energy storage system, and the power regulation system comprises an energy storage controller, a supercapacitor, and a lithium battery; and
   the energy storage controller is configured to determine the operation mode corresponding to the demand power reference value, and control the supercapacitor and the lithium battery to perform the low-frequency oscillation suppression according to the operation mode.

12. The control system for low-frequency oscillation according to claim 11, wherein the energy storage controller, which is configured to determine the operation mode corresponding to the demand power reference value, and control the supercapacitor and the lithium battery to perform low-frequency oscillation suppression according to the operation mode, is further configured to:

   determine that the operation mode is a first operation mode, in response to the demand power reference value being not greater than a demand power threshold; and perform the low-frequency oscillation suppression according to the first operation mode, wherein the first operation mode comprises: regulating power via the supercapacitor or the lithium battery; and

determine that the operation mode is a second operation mode, in response to the demand power reference value being greater than the demand power threshold; and perform the low-frequency oscillation suppression according to the second operation mode, wherein the second operation mode comprises: regulating power via one of the supercapacitor or the lithium battery, or regulating power via both of the supercapacitor and the lithium battery.

A value of a specified parameter of a power system is obtained ⌐S11

Whether the power system is in a low-frequency oscillation state ⌐S12

No

Yes

An oscillation regulation parameter of a power oscillation damping is determined based on the value of the specified parameter, and a delay regulation parameter is determined based on an oscillation communication delay calculated in advance ⌐S13

A demand power reference value is calculated based on the oscillation regulation parameter and the delay regulation parameter, and the demand power reference value is inputted into a power regulation system to cause the power regulation system to perform low-frequency oscillation suppression based on the demand power reference value ⌐S14

**FIG. 1**

A maximum value and a minimum value of an oscillation frequency within the current sampling period are determined based on the value of the specified parameter — S21

A maximum value and a minimum value of the oscillation frequency within the previous sampling period are obtained — S22

A proportional coefficient of the power oscillation damping and a phase compensation transfer function value are determined as the oscillation regulation parameter of the power oscillation damping, in the case that an offset between the maximum value of the oscillation frequency within the current sampling period and the maximum value of the oscillation frequency within the previous sampling period, and/or, an offset between the minimum value of the oscillation frequency within the current sampling period and the minimum value of the oscillation frequency within the previous sampling period is greater than a preset offset threshold — S23

**FIG. 2**

Multiple sets of current total delays are determined, and an average value of the multiple sets of current total delays is calculated as an average delay — S31

A delay interval in which the average delay is located is determined, and a delay regulation parameter corresponding to the delay interval is obtained — S32

**FIG. 3**

| Sampling device | Power oscillation damping | Power regulation system |

11 12 13

**FIG. 4**

## INTERNATIONAL SEARCH REPORT

International application No.

**PCT/CN2023/090550**

### A. CLASSIFICATION OF SUBJECT MATTER

H02J 3/24(2006.01)i;　H02J 3/32(2006.01)i;　H02J 3/00(2006.01)i;　H02J 13/00(2006.01)i

According to International Patent Classification (IPC) or to both national classification and IPC

### B. FIELDS SEARCHED

Minimum documentation searched (classification system followed by classification symbols)

　　IPC; H02J

Documentation searched other than minimum documentation to the extent that such documents are included in the fields searched

Electronic data base consulted during the international search (name of data base and, where practicable, search terms used)

　　CNTXT, ENTXTC, DWPI, ENTXT, CNKI, WPABS: 低频, 振荡, 通信, 延时, 阻尼, 功率, low frequency, oscillation, communication, delay, damp, power

### C. DOCUMENTS CONSIDERED TO BE RELEVANT

| Category* | Citation of document, with indication, where appropriate, of the relevant passages | Relevant to claim No. |
|---|---|---|
| PX | CN 115833179 A (SUNGROW POWER SUPPLY (NANJING) CO., LTD.) 21 March 2023 (2023-03-21)<br>　　claims 1-12 | 1-12 |
| Y | CN 105071414 A (ZHEJIANG UNIVERSITY OF TECHNOLOGY) 18 November 2015 (2015-11-18)<br>　　description, paragraphs [0005]-[0072], and figures 1-7 | 1-12 |
| Y | CN 108365615 A (HUAZHONG UNIVERSITY OF SCIENCE AND TECHNOLOGY et al.) 03 August 2018 (2018-08-03)<br>　　description, paragraphs [0002]-[0115], and figures 1-9 | 1-12 |
| Y | CN 108233397 A (CHINA ELECTRIC POWER RESEARCH INSTITUTE CO., LTD. et al.) 29 June 2018 (2018-06-29)<br>　　description, paragraphs [0004]-[0132], and figures 1-5 | 1-12 |
| Y | CN 101465550 A (TSINGHUA UNIVERSITY et al.) 24 June 2009 (2009-06-24)<br>　　description, page 2, line 1-page 8, last line, and figures 1-8 | 1-12 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 August 2023** | **28 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/090550** |

### C. DOCUMENTS CONSIDERED TO BE RELEVANT

| Category* | Citation of document, with indication, where appropriate, of the relevant passages | Relevant to claim No. |
| --- | --- | --- |
| A | CN 101557110 A (STATE GRID ELECTRIC POWER RESEARCH INSTITUTE et al.) 14 October 2009 (2009-10-14)<br>entire document | 1-12 |
| A | CN 104836245 A (NANJING UNIVERSITY OF POSTS AND TELECOMMUNICATIONS) 12 August 2015 (2015-08-12)<br>entire document | 1-12 |
| A | US 2019109461 A1 (UNIVERSITY OF ALBERTA) 11 April 2019 (2019-04-11)<br>entire document | 1-12 |

## INTERNATIONAL SEARCH REPORT
### Information on patent family members

International application No.

**PCT/CN2023/090550**

| Patent document cited in search report | | | Publication date (day/month/year) | Patent family member(s) | | | Publication date (day/month/year) |
|---|---|---|---|---|---|---|---|
| CN | 115833179 | A | 21 March 2023 | None | | | |
| CN | 105071414 | A | 18 November 2015 | CN | 105071414 | B | 25 July 2017 |
| CN | 108365615 | A | 03 August 2018 | CN | 108365615 | B | 09 February 2021 |
| CN | 108233397 | A | 29 June 2018 | None | | | |
| CN | 101465550 | A | 24 June 2009 | CN | 101465550 | B | 26 January 2011 |
| CN | 101557110 | A | 14 October 2009 | CN | 101557110 | B | 13 April 2011 |
| CN | 104836245 | A | 12 August 2015 | CN | 104836245 | B | 08 March 2017 |
| US | 2019109461 | A1 | 11 April 2019 | CA | 3018726 | A1 | 26 March 2019 |
| | | | | US | 10971937 | B2 | 06 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211637445